# EUROPEAN PATENT APPLICATION

(11) **EP 2 902 474 A1**
(43) Date of publication of application: **05.08.2015**
(21) Application number: 13842290.2
(22) Date of filing: 25.09.2013
(51) Int. Cl.: C12G 3/04, A23L 1/221, A23L 1/226, A23L 2/00, A23L 2/38, C12C 3/00, C12C 5/00

(54) **MONOMERIC PROANTHOCYANIDIN-REMOVED PLANT EXTRACT**

(30) Priority: 28.09.2012 JP 2012218317
(71) Applicant: Suntory Holdings Limited, Osaka-shi, Osaka 530-8203 (JP)
(72) Inventor: YONEZAWA, Daisaku, Mishima-gun Osaka 618-0001 (JP)
(74) Representative: Vossius & Partner Patentanwälte Rechtsanwälte mbB
(86) International application number: PCT/JP2013/075798
(87) International publication number: WO 2014/050840

(57) **Abstract**

An extract or the like that can add not just bitterness and fragrance, but taste such as richness or robustness, without enhancing astringency or acridity, as well as a beverage having excellent richness or robustness, is provided. Polyphenols derived from hop, especially those containing reduced proanthocyanidin monomers and a relatively high amount of proanthocyanidin dimers to proanthocyanidin tetramers, can add richness or robustness to a beverage without enhancing an astringent taste or lack of snappiness.

## Description

### TECHNICAL FIELD

The present invention relates to plant extracts that have a high proanthocyanidin content and that have a reduced amount of proanthocyanidin monomers, and a taste agent using the same. Further, the present invention relates to a proanthocyanidin-containing beverage having a low proanthocyanidin monomer content.

### BACKGROUND ART

Recently, there is a demand in the field of beer, *happoshu*, and beer-taste beverages, such as a non-alcohol beer-taste beverage, for a method to improve the flavor in accordance with the diversified preferences of consumers.

Processing methods that subject hops to processing and/or aging to improve the quality of bitterness and flavor, and methods to enrich flavor by processing and/or aging hops are disclosed based on the fact that hops, which are used to produce beer and beer-taste beverages, include substances that provide bitterness and flavor.

Specific disclosures of processing methods to improve the quality of bitterness include: a method to produce an easy-to-drink sparkling alcohol beverage having a refined, snappy bitterness and a moderate astringency by extracting/removing the aqueous astringency component and low molecular bitterness component from the hops (Patent Document 1); and a method to produce a sparkling alcohol beverage having a lasting mild bitterness by using hops that had been stored at a high temperature (Patent Document 2).

Disclosures of methods to improve flavor include: a production method of after-ripening hop that enriches the hop flavor material (Patent Document 3): and a method using raw hop that was frozen after harvest, without being dried, to provide a fresh hop flavor (Patent Document 4).

Additional disclosures include: a production method of a new type of alcohol beverages, produced by adding apple wine and hop polyphenol or apple polyphenol to a low-alcohol beverage (Patent Document 5); and a production method of a polypheno-enhanced beer using a six-rowed barley malt as the material (Patent Document 6).

### CITATION LIST

### PATENT DOCUMENTS

Patent Document 1: Japanese Patent Unexamined Publication No. 2009-77671
Patent Document 2: Japanese Patent Unexamined Publication No. 2008-212041
Patent Document 3: Japanese Patent Unexamined Publication No. 2007-89439
Patent Document 4: Japanese Patent Unexamined Publication No. 2004-81113
Patent Document 5: Japanese Patent Unexamined Publication No. 2005-204585
Patent Document 6: Japanese Patent Unexamined Publication No. 2003-245064

### SUMMARY OF INVENTION

### TECHNICAL PROBLEM

The object of the present invention is to provide extracts and the like that can add taste, such as richness and robustness, in addition to adding flavor and bitterness, without enhancing an astringent taste and the lack of snappiness, and to provide beverages with excellent richness and robustness.

### SOLUTION TO PROBLEM

The present inventors conducted intensive studies to solve the above problem and discovered that the hop-derived polyphenol increases the richness and robustness of the beverage. Further, the inventors discovered that of the hop-derived polyphenols. polymeric polyphenol, especially that which has reduced proanthocyanidin monomers and that which mainly consists of proanthocyanidin dimers to proanthocyanidin tetramers, should be used to add richness and robustness to the beverage without enhancing an astringent taste and the lack of snappiness; and they completed the invention.

The present invention includes the following inventions without being limited thereby.
(1) A proanthocyanidin-containing plant extract, wherein a weight percentage of proanthocyanidin monomers against a total content of proanthocyanidin is 12% or lower.
(2) The plant extract according to (1), wherein the weight percentage of proanthocyanidin monomers against a total content of proanthocyanidin is 10% or lower.
(3) The plant extract according to (1) or (2), wherein the weight percentage of proanthocyanidin dimers to proanthocyanidin tetramers against a total content of proanthocyanidin is 75% or higher.
(4) The plant extract according to any one of (1) to (3), wherein a plant is hop.
(5) A beverage having a total proanthocyanidin content of 1 ppm or higher, wherein the weight percentage of proanthocyanidin monomers against a total content of proanthocyanidin is 26% or lower.
(6) The beverage according to (5), wherein the weight percentage of proanthocyanidin monomers against a total content of proanthocyanidin is 19% or lower.
(7) The beverage according to (6), wherein the weight percentage of proanthocyanidin monomers against a total content of proanthocyanidin is 15% or lower.
(8) The beverage according to any one of (5) to (7), wherein proanthocyanidin is derived from hop.
(9) The beverage according to any one of (5) to (8), wherein the beverage is a beer-taste beverage.
(10) A taste agent that contains proanthocyanidin, wherein the weight percentage of proanthocyanidin monomers against a total content of proanthocyanidin is 12% or lower.
(11) The taste agent according to (10), wherein the weight percentage of proanthocyanidin monomers against a total content of proanthocyanidin is 10% or lower.
(12) The taste agent according to (10) or (11), wherein the weight percentage of proanthocyanidin dimers to proanthocyanidin tetramers against a total content of proanthocyanidin is 75% or higher.
(13) The taste agent according to any one of (10) to (12), wherein a plant is hop.
(14) A method for producing a plant extract with a reduced amount of proanthocyanidin monomers, comprising the steps of:
   (i) extracting polyphenol from a plant using an aqueous solvent;
   (ii) performing an activated carbon treatment on an obtained extract.
(15) The method according to (14), wherein a plant is hop.

### ADVANTAGEOUS EFFECTS OF INVENTION

The use of a plant extract or a taste agent of the present invention with a low proanthocyanidin monomer content makes it possible to add richness and robustness to *happoshu,* which are generally weak in richness and robustness compared to beer, beer-taste beverages categorized as liquor, and beverages with low alcohol or no alcohol, without enhancing an astringent taste and the lack of snappiness. Further, the abundance of proanthocyanidin dimers to proanthocyanidin tetramers, constituting the major portion of the content, provide richness and robustness to the beverage.

### BRIEF DESCRIPTION OF DRAWINGS

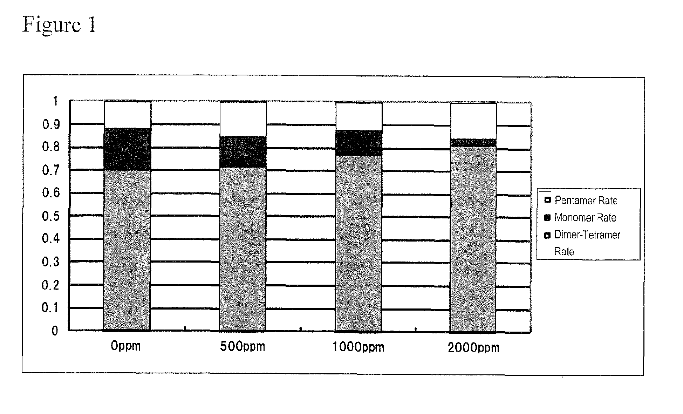

Figure 1 is a figure showing the proportion of monomers, dimers to tetramers and pentamers contained in the plant extract.

### DESCRIPTION OF EMBODIMENTS

The present invention relates to a plant extract that has a high proanthocyanidin content and that has a reduced amount of proanthocyanidin monomers, and a taste agent using the same. Further, the present invention relates to a proanthocyanidin-containing beverage having a low proanthocyanidin monomer content. In addition, the present invention relates to a method for providing richness or robustness to a beverage by reducing the amount of proanthocyanidin monomers against the total proanthocyanidin in the beverage.

### <A plant extract with a reduced amount of proanthocyanidin monomers, and a production method of the same>

The plant extract of the present invention is a proanthocyanidin-containing plant extract, in which proanthocyanidin monomers are contained at a weight percentage of 12% or lower against the total proanthocyanidin content. Preferably, proanthocyanidin monomers are contained at a weight percentage of 10% or lower, and more preferably, 8% or lower.

The plant extract of the present invention contains proanthocyanidin dimers to proanthocyanidin tetramers at a weight percentage of 75% or higher against the total proanthocyanidin content. Preferably, proanthocyanidin dimers to proanthocyanidin tetramers are contained at a weight percentage of 80% or higher, and more preferably, at 85% or higher.

In the present specification, "total proanthocyanidin" means the total of the monomers, dimers, trimers, tetramers and pentamers of proanthocyanidin.

Plant extracts that have a high proanthocyanidin content of the present invention can be used as additives to provide richness and robustness. Further, the plant extracts that have a high proanthocyanidin content can provide richness (thickness) without enhancing negative flavor, such as an astringent taste or lack of snappiness, by being added before the fermentation step of beer and the like.

In the present specification, "richness" is a combination of the expansion (thickness) of the taste and its chronological change (lingering sensation), and "robustness" is the strength of the taste.

Proanthocyanidin is a polyphenol compound formed by the condensation or polymerization of flavanol, and proanthocyanidin trimer has a structure represented by the following general formula.

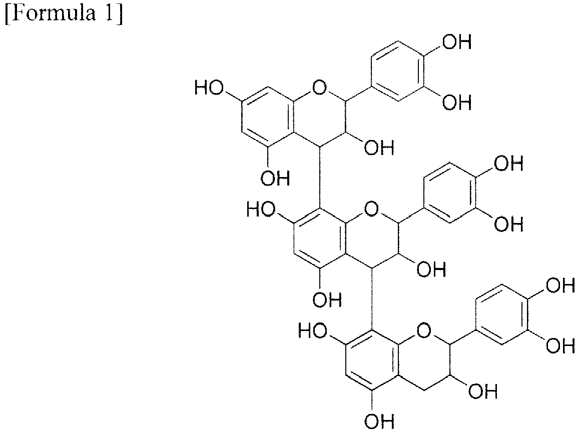

The plant extract of the present invention can include pentamers or higher, as long as it satisfies the above requirement concerning the weight percentage of proanthocyanidin monomers against the total proanthocyanidin content and the weight percentage of proanthocyanidin dimers to proanthocyanidin tetramers against the total proanthocyanidin content.

The plant extracts that have a high proanthocyanidin content of the present invention can be obtained by selectively removing proanthocyanidin monomers after extracting polyphenol from hops using an aqueous solvent, and the extract that can be obtained is a plant extract with a reduced amount of proanthocyanidin monomers. One method for selectively removing proanthocyanidin monomers is the activated carbon treatment.

The hops to be used is not limited by the variety, and it includes Saaz, Tradition, Perle, Cascade, and Nugget. Multiple varieties can be mixed as well.

The part of hop to be used can be any part, as long as it includes proanthocyanidin. Further, the form of hop to be used in the present invention can be any of fresh hop, frozen hop, dried hop, and examples include hop pellets formed by compressing hop, dried hop cone, hop bract, residues from producing hop extract component, which is a bitterness component extracted from hop by supercritical CO₂ and the like, and powders thereof, as well as aqueous fraction extract, which is a side product from producing hop extract components of ethanol extraction (e.g. Tannin Extract produced by Hopsteiner).

A known method can be appropriately used for polyphenol extraction from hop, and polyphenol can be extracted by mixing hop with an aqueous solvent, filtering the mixture, and recovering the filtrate. Aqueous solvents to be used in the polyphenol extraction include water, alcohol, such as ethanol, or the mixture thereof. The condition of extraction can be adjusted as necessary, and extraction can be performed at an exemplary condition of mixing hot water of 95°C or higher and a hop pellet, then stirring it for 10 to 30 minutes.

The obtained extract can be subjected in the obtained state to a treatment of removing proanthocyanidin monomers, or its concentrated product or its freeze-dried powder dissolved in a solvent, such as an ethanol solution, can be used in the treatment of removing proanthocyanidin monomers.

The activated carbon is a substance whose main component is porous carbon that had been put under a chemical or physical activation treatment to be used as an adsorbent. The activated carbon to be used in the present invention is not particularly limited, but a known, or commercially available activated carbon can be selected as necessary. The activated carbon is not particularly limited by the material or method of production. Any commonly available activated carbon can selectively remove proanthocyanidin monomers by being brought into contact with the above plant extract. A person skilled in the art would consider different types, amounts and the like of activated carbon, as necessary, to select an optimum activated carbon in accordance with the object of the present invention.

The activated carbon treatment is a way of obtaining a plant extract whose proanthocyanidin monomers are selectively removed by bringing the plant extract in contact with activated carbon. In the activated carbon treatment, it is possible to appropriately set the amount and concentration of the liquid to be treated, and the type, amount and contact time of the activated carbon, as well as the temperature, etc. The contact time is preferably from about a few minutes to an hour. A desired plant extract can be obtained by removing activated carbon using a known solid-liquid separation means, such as filtration and centrifugation, after the treatment with activated carbon.

Proanthocyanidin monomers can be selectively removed not just by activated carbon treatment, but also by a fraction treatment, and gel filtration chromatography can be used by way of example. Specifically, proanthocyanidin monomers can be reduced, and extracts containing proanthocyanidin dimers to proanthocyanidin tetramers at a high proportion can be obtained by the following method. To begin with, a freeze-dried powder of an extract obtained from hop is dissolved in 10% ethanol and added to the gel filtration chromatography carrier (e.g. Sephadex^{™} LH-20 (GE Healthcare Bioscience)). Then, the carrier is washed with water of about 2 to 5 folds of the filled carrier volume. Further, the ethanol solution is passed through the column as the concentration is sequentially raised in a range between 0% to 100%, and a fraction with a large proanthocyanidin dimer to proanthocyanidin tetramer content is recovered. The ethanol solution used in elution can be adjusted as necessary; for example, water, 35% ethanol solution, 70% ethanol solution, 100% ethanol solution can be passed through the column in that order to separate proanthocyanidin by the degree of polymerization. The content of proanthocyanidin dimers to proanthocyanidin tetramers in the eluted fraction can be measured using, for example, a normal phase high-performance liquid chromatography (HPLC) (JP 2006-38763 A). Whether the obtained material is the desired proanthocyanidin dimers to proanthocyanidin tetramers can be verified by a measurement of the molecular weight using LS/MS.

The recovered fraction can be used in the recovered state as a plant extract having a high proanthocyanidin dimer to proanthocyanidin tetramer content, or it can be used after a concentration treatment, a freeze-drying treatment or a spray-drying treatment.

### <Taste Agent>

A plant extract of the present invention, which mainly includes proanthocyanidin dimers to proanthocyanidin tetramers, and whose proanthocyanidin monomers are reduced, can be used as a taste agent for adding richness and robustness to beverages.

In the taste agent of the present invention, proanthocyanidin monomers are contained at 12% by weight or lower against the total proanthocyanidin content. Preferably, proanthocyanidin monomers are contained at 10% by weight or lower, and more preferably, 8% by weight or lower.

The taste agent of the present invention contains proanthocyanidin dimers to proanthocyanidin tetramers at 75% or higher against the total proanthocyanidin content. Preferably, proanthocyanidin dimers to proanthocyanidin tetramers are contained at 80% by weight or higher, and more preferably, at 85% or higher.

The taste agent of the present invention can be obtained by, for example, extracting polyphenol from hop, then putting polyphenol under a treatment to selectively remove proanthocyanidin monomers, and the obtained taste agent is a taste agent with a reduced amount of proanthocyanidin monomers.

The taste agent of the present invention can add richness or robustness without enhancing astringency or acridity when it is blended with a beverage, since it has a high content of proanthocyanidin dimer to proanthocyanidin tetramer. Hence, the present invention is also a method for adding richness or robustness to beverage by reducing the amount of proanthocyanidin monomers to the total proanthocyanidin in the beverage.

Beverages incorporating the taste agent of the present invention include not just *happoshu* and a beer-taste beverage, but also beverages that do not contain alcohol, such as carbonated drink, fruit juice drinks, sport drinks, nutritional beverages, without being particularly limited thereby.

The amount of the taste agent of the present invention to be incorporated should be 3.6×10⁻⁴ wt% to 10.5×10⁻⁴ wt%, preferably 5.2×10⁻⁴ wt% to 8.9×10⁻⁴ wt%, and more preferably 6.8×10⁻⁴ wt% to 7.4×10⁻⁴ wt%.

Incorporation into fermented beverages, such as beer and *happoshu,* can be at any stage as long as it is before the secondary fermentation step. However, it is preferable to add the taste agent immediately before the secondary fermentation step.

The taste agent of the present invention may include any additive including an emulsifier, a tensifying agent, a buffering agent, a solubilizer, an antiseptic, a stabilizer, and an antioxidant, as long as the effect of the taste agent remains intact.

The taste agent of the present invention can be in any dosage form including liquid, powder, granules and tablets, in accordance to the purpose of use. Any material for formulation can be added in the process including an excipient, a disintegrator, a lubricant, a binder, an antioxidant, a deflocculating agent, an absorption promoting agent, a solubilizer, a stabilizer, a solubilizing agent, a corrigent, a flavor, and a coloring agent.

### <Beverage>

The beverage of the present invention has excellent richness or robustness. This is an effect of an increase in the relative ratio of the content of proanthocyanidin dimer to proanthocyanidin tetramer in the beverage.

The beverage of the present invention has a total proanthocyanidin content of 1 ppm or higher, and the weight percentage of proanthocyanidin monomers against the total proanthocyanidin content is 26% or lower. The total proanthocyanidin content is preferably 6 ppm or higher, and more preferably 10 ppm or higher. The weight percentage of proanthocyanidin monomers against the total proanthocyanidin content is preferably 19 or 15% or lower, and more preferably 12% or lower.

The proanthocyanidin in the beverage of the present invention is preferably derived from hop.

Unlimiting examples of the beverage of the present invention include not just *happoshu* and a beer-taste beverage, but also beverages that do not contain alcohol, such as carbonated drink, fruit juice drinks, sport drinks, nutritional beverages.

The beverage of the present invention can be obtained by adding the above taste agent to the beverage, as well as by putting the beverage obtained by a normal method under a treatment to reduce proanthocyanidin monomers. An example of production by the prior method is a method of extracting polyphenol from hop, then adding the taste agent obtained by treating polyphenol through selectively removing proanthocyanidin monomers to *happoshu* or a beer-taste beverage.

The present invention is described more specifically by the Examples, but the technical scope of the present invention is not limited by these examples.

### EXAMPLES

### Example 1 (Activated Carbon Treatment)

Hop pellets (20g) were subjected to extraction under agitation in 2 L of water at 60°C for 20 minutes. Then the extract was filtered with a filter paper, and left to cool, and activated carbons of different concentrations were added to 250 ml of the extract and agitated at room temperature for 60 minutes. The activated carbon of Japan EnviroChemicals (Product name: FP1, FP3, FP4, FP6, and FP9) was used. Then, after the activated carbon was filtered using a filter of 0.2 µm, it was concentrated and freeze-dried. The obtained powder was analyzed by (HPLC, and monomers to pentamers of proanthocyanidin were quantified.

(HPLC Condition) Devices: HEWLETT PACKARD SERIES 1100; column: Inert Sil (GL Sciences Inc. SIL 100A 3 µm 4.6×150 mm), flow rate: 1.0 ml/min, an isocratic elution using a solution of mobile phase: hexane: methanol: tetrahydrofurane: formic acid = 45:40:14:1; sample insertion: 10 µl, detection: multiwavelength detection at 200 to 300 nm. The result

| Amount in treatment liquid for treating extract of PAO (mg) 250 ml subjected to active carbon treatment at different concentrations | | | | | | | | | | | | | | | | | | |
|---|---|---|---|---|---|---|---|---|---|---|---|---|---|---|---|---|---|---|
| | Untreated | Membrane treatment | FP1 | | | | FP3 | | | | FP4 | | | | FP9 | | | |
| Added active C concentration (com) | 0 | 0 | 500 | 1000 | 2000 | 3000 | 500 | 1000 | 2000 | 3000 | 500 | 1000 | 2000 | 3000 | 500 | 1000 | 2000 | 3000 |
| Monomer | 10.92 | 9.75 | 6.91 | 2.29 | 0.40 | 016 | 4.12 | 2.74 | 0.77 | 1.06 | 10.29 | 7.34 | 7.64 | 3.11 | 9.71 | 5.99 | 7.49 | 4.88 |
| Dimer | 12.57 | 12.49 | 10.84 | 8.99 | 4.60 | 0.95 | 10.93 | 14.00 | 9.90 | 6.46 | 11.35 | 10.76 | 12.77 | 13.22 | 12.73 | 10.08 | 12.43 | 11.82 |
| Trimar | 14.85 | 15.18 | 10.75 | 10.17 | 4.38 | 1.34 | 13.78 | 11.29 | 10.14 | 6.59 | 13.20 | 10.46 | 13.88 | 10.04 | 11.70 | 10.70 | 14.32 | 12.89 |
| Tatramar | 11.96 | 11.74 | 7.98 | 7.08 | 314 | 0.53 | 10.27 | 8.99 | 7.34 | 5.94 | 10.20 | 8.50 | 9.98 | 7.86 | 9.35 | 8.04 | 11.64 | 10.02 |
| Pentamer | 5.71 | 5.31 | 3.75 | 2.91 | 1 31 | 0.00 | 5.31 | 4.90 | 3.74 | 3.16 | 6.02 | 4.77 | 4.98 | 4.61 | 5.16 | 4.59 | 6.61 | 5.51 |
| total | 56.01 | 54.47 | 40.23 | 31.44 | 13.82 | 2.99 | 44.41 | 41.93 | 31.88 | 23.21 | 51.06 | 41.83 | 49.25 | 38.84 | 48.64 | 39.41 | 52.50 | 45.13 |
| 2-4total | 39.38 | 39.41 | 29.57 | 26.24 | 12.12 | 2.83 | 34.97 | 34.28 | 27.37 | 18.99 | 34.75 | 29.72 | 36.63 | 31.12 | 33.78 | 28.83 | 38.39 | 34.73 |

### Example 2 (Addition Test of Activated-Carbon-Treated Hop Extract)

Polyphenol-rich pellets (Polyphenol-Rich Hop Pellets of Hopsteiner) (10g) were subjected to extraction in 1 liter of water of 60°C, and the obtained extract was filtered using a filtering paper. To a filtrate obtained by filtration, an activated carbon was added at a concentration of 500, 1000, 2000 ppm. FP3 of Japan EnviroChemicals was used as the activated carbon. In the activated carbon treatment, agitation was performed at a room temperature of about 26°C for 1 hour. The obtained filtrate was filtered at a pore size of 0.2 µm using the membrane filter of ADVANTEC. The activated-carbon-treated liquid that was obtained was put under vacuum concentration (30°C, 20 mmHg or lower), and freeze-dried (frozen at -80°C, then dried in a vacuum at -84°C). After being freeze-dried, the obtained extract was added to commercially supplied beer-taste beverages so that the total amounts of proanthocyanidin are the same (7.3 mg), and a sensory assessment was performed.

The sensory assessment was performed by a panel of five, and the assessment items were rated from "not identifiable"=0 to "strongly identifiable"=3, with "moderately identifiable"=1, and "identifiable"=2. The assessment items included richness (thickness) and robustness as positive factors and the lack of snappiness, an astringent taste as negative factors.

Table 2 shows an amount of added extracts and an amount of proanthocyanidin in the added extracts. Figure 1 is a graph of an amount of different types of proanthocyanidins in the added extract.

**[Table 2]**

| Added amount (mg) | | | | |
|---|---|---|---|---|
| | 0ppm (unprocessed) | 500ppm | 1000ppm | 2000ppm |
| Added extract amount | 158 | 158 | 158 | 171 |

| PAO content in the added extract amount (mg) | | | | |
|---|---|---|---|---|
| | 0ppm | 500ppm | 1000ppm | 2000ppm |
| Monomer | 1.3 | 0.9 | 0.8 | 0.2 |
| Dimer | 2.0 | 2.1 | 2.3 | 2.2 |
| Trimer | 1.9 | 1.7 | 1.8 | 2.0 |
| Tetramer | 1.3 | 1.4 | 1.5 | 1.7 |
| Pentamer | 0.9 | 1.1 | 0.9 | 1.1 |
| total | 7.3 | 7.3 | 7.2 | 7.1 |
| 2-4total | 5.1 | 5.3 | 5.5 | 5.8 |
| 2-4 Ratio | 70.2% | 71.8% | 76.7 | 81.4% |
| 1 Ratio | 17.6% | 12.8% | 10.9 | 3.0% |
| 5 Ratio | 12.1% | 15.4% | 12.4 | 15.6% |

An addition test result is shown in Table 3.

**[Table 3]**

| PAO content (ppm) in the product | | | | | |
|---|---|---|---|---|---|
| Active carbon concentration | No added extract | 0ppm (Unprocessed) | 500ppm | 1000ppm | 2000ppm |
| Monomer | 1.56 | 3.60 | 3.05 | 2.81 | 1.90 |
| Total PAO | 4.10 | 15.66 | 15.70 | 15.53 | 15.36 |
| Monomer/total (%) | 38.0% | 23.0% | 19.4% | 18.1% | 12.4% |
| Sensory Assess | | | | | |
| Richness | 1.0 | 1.5 | 1.4 | 1.5 | 1.4 |
| robustness | 1.2 | 1.4 | 1.3 | 1.6 | 1.3 |
| lack of snappiness | 0.6 | 0.8 | 0.8 | 0.4 | 0.5 |
| astringency | 0.5 | 0.6 | 0.8 | 0.3 | 0.3 |

| | | | | | |
|---|---|---|---|---|---|
| Sensory Test Method Average of expert panel of 5 Points 0 = not identifiable 1 = moderately identifiable 2 = identifiable 3 = strongly identifiable | | | | | |

It was made clear that the richness and robustness will increase by adding the above activated-carbon-treated extract. Further, the most desirable result was obtained, in which only the positive factors increased without any increase in the negative factors, namely, an astringent taste and the lack of snappiness.

### Example 3 Analysis of Proanthocyanidins of Different Degrees of Polymerization

Commercial products, such as beer, *happoshu* and non-alcohol beer-taste beverage, in an amount of 500 ml were sonicated and degassed, then they were concentrated under reduced pressure at 30°C to 250 ml and freeze-dried. Freeze-dried powder was dissolved in 10% ethanol of 20 ml, then the product was passed through a column filled with 450 ml of LH20, followed by 1500 ml of water, 1500 ml of 30% ethanol, 1500 ml of 100% ethanol and 1000 ml of 80% acetone to separate fractions containing polyphenol and other materials that are adsorbed by resin.

These fractions were concentrated under reduced pressure at 30°C to about 20 ml, then freeze-dried.

The fractions that was eluted by 30% ethanol or subsequent solutions were dissolved again in 10% ethanol (0.1 g/ml), and passed through a column filled with 60 ml of LH20, followed by 180 ml of water, 180 ml of 35% ethanol, 240 ml of 70% ethanol, 200 ml of 100% ethanol and 100 ml of 80% acetone to obtain the different fractions. The fractions were each concentrated under reduced pressure at 30°C, then freeze-dried, and they were analyzed by HPLC under the same conditions. The result is shown in Tables 4 and 5 (the amount of proanthocyanidin at each degree of polymerization is shown (unit, mg/L)).

**[Table 4]**

| | ppm |
|---|---|
| | Commercial Non-alcohol beer |
| Monomer | 1.56 |
| Dimer | 1.98 |
| Trimer | 0.56 |
| Tetramer | under detection limit |
| Total polyphenol | 4.1 |
| Monomer/Total | 38% |

**[Table 5]**

| | Commercial Beer A | Commercial Beer B | Commercial New Type Beverage | Commercial Beer C | Commercial Beer D |
|---|---|---|---|---|---|
| Monomer | 19.8 | 15 | 11.1 | 16.1 | 13.1 |
| Dimer | 22.7 | 19 | 13.3 | 20.7 | 17.5 |
| Trimer | 5.6 | 2.4 | 4.3 | 2.8 | 4.2 |
| Tetramer | under detection limit | under detection limit | under detection limit | under detection limit | under detection limit |
| Total polyphenol | 48.04 | 36.41 | 28.66 | 39.69 | 34.89 |
| Monomer/Total | 41% | 51% | 39% | 41% | 38% |

In the commercially obtained *happoshu* and non-alcohol beer-taste beverage, the weight percentage of proanthocyanidin monomers against the total content of proanthocyanidin was 38% or higher. Note that the tetramers and pentamers were below the detection limit.

### Example 4 (Activated Carbon Treatment)

### 1) Preparation of the Hop Bract Extract

The hop bract was subjected to extraction under agitation in water at a concentration of 40 g/L at 97°C, for 20 minutes. The product was filtered using a filtering paper, then freeze-dried and formed into powders.

### 2) Production of Activated Carbon Treatment

The hop bract was subjected to extraction under agitation in water at a concentration of 40 g/L at 97°C, for 20 minutes. The product was filtered using a filtering paper, then treated for 1 hour with 6000 ppm of activated carbon (wet weight substantially 2000 pm), then freeze-dried and formed into powders. Activated carbons of Japan EnviroChemicals were used (Product name: FP3).

### 3) Analysis

Powders obtained by the above 1) and 2) were analyzed using HPLC, and proanthocyanidin monomers to proanthocyanidin pentamers were quantified. (HPLC Condition) Devices: HEWLETT PACKARD SERIES 1100; column: Inert Sil (GL Sciences Inc. SIL 100A 3 µm 4.6×150 mm), flow rate: 1.0 ml/min, an isocratic elution using a solution of mobile phase: hexane: methanol: tetrahydrofurane: formic acid = 45:40:14:1; sample insertion: 10 µl, detection: multiwavelength detection at 200 to 300 nm. The result is shown in Table 6. It was verified that proanthocyanidin monomers are selectively removed by the activated carbon treatment using the hop bract as the material.

**[Table 6]**

| | PAO Content in the powder (mg/g) | |
|---|---|---|
| PAO | 1) extract | 2) activated carbon treated extract component |
| Monomer | 6.88 | 0.75 |
| Dimer | 13.03 | 16.79 |
| Trimer | 11.12 | 10.20 |
| Tetramer | 7.83 | 6.99 |
| Pentamer | 5.60 | 4.28 |
| Total | 44.46 | 39.01 |
| % of Monomer | 15% | 2% |

### Example 5 (Addition Test of Activated-Carbon-Treated Hop Bract Extract Powders)

Powders prepared in 1) and 2) of Example 4 were used in the production of a beer-taste beverage.

The effect of adding the above powders to the fermented liquid was evaluated in comparison to common beer brewing. In Test 1 (Cont) for control, no powder was added, in Test 1 (T1), 13.50 g of the powder of 1), not treated by activated carbon, was added to 60 L of wort to be fermented to achieve 10 ppm increase by the additional powder in the total amount of proanthocyanidin. In Test 2 (T2), 15.38 g of the powder of 2), treated by activated carbon, was added to 60 L of wort to be fermented to achieve 10 ppm increase by the additional powder in the total amount of proanthocyanidin. In Test 3 (T3), 23.08 g of the powder of 2), treated by activated carbon, was added to 60 L of wort to be fermented to achieve 15 ppm increase by the additional powder in the total amount of proanthocyanidin.

Note that the proanthocyanidin added in each test was added by the weight given in the following Table 7.

**[Table 7]**

| Weight of PAO (mg) in Added Extract Component (Powder) | | | |
|---|---|---|---|
| Level | T1 | T2 | T3 |
| Monomer | 93 | 11 | 17 |
| Dimer | 176 | 258 | 388 |
| Trimer | 150 | 157 | 235 |
| Tetramer | 106 | 108 | 161 |
| Pentamer | 76 | 66 | 99 |
| Total | 600 | 600 | 900 |

The proanthocyanidin concentration in the brewed product obtained by the fermentation test was measured. The result is shown in Table 8.

**[Table 8]**

| PAO Concentration in brewed product (ppm=mg/L) | | | | |
|---|---|---|---|---|
| | Cont | T1 | T2 | T3 |
| Monomer | 2.86 | 4.25 | 3.02 | 3.19 |
| Dimer | 5.22 | 6.18 | 6.21 | 7.11 |
| Trimer | 1.01 | 1.91 | 2.52 | 2.74 |
| Total | 9.09 | 12.35 | 11.75 | 13.04 |
| % of Monomer | 31% | 34% | 26% | 24% |

Based on the result of analysis, an increase of proanthocyanidin was seen in each test in which powder was added compared to the control (Cont).

Proanthocyanidin was added in T1 and T2 so that the proanthocyanidin weight of each is the same, and a comparison of the weights resulted as follows: the monomer content of T2, in which an extract component (powder) whose monomers were selectively removed by activated carbon treatment, was approximately the same as that of Cont; however, in T1, in which an extract not treated by activated carbon was added, an increase was observed not just for dimers and trimers but also for monomers. Further, when T2 and T3 having different addition concentrations were compared, there was a greater amount of proanthocyanidin in T3, whose amount of addition was larger. The result showed that the concentration of dimers and trimers can be increased without increasing the concentration of monomers by subjecting the extract to an activated carbon treatment and adding an extract component (powder) whose monomers are selectively removed. On the other hand, an increase in the amount of monomers is observed in an extract that is not treated with activated carbon.

The sensory assessment of the above brewed products was performed. A panel of eight performed the assessment, and the assessment items were rated from "not identifiable"=0 to "strongly identifiable"=3, with "moderately identifiable"=1, and "identifiable"=2. The ratings were averaged and an average of 2 or higher and 3 or lower was marked as ○, 1 or higher and lower than 2 was marked Δ, and lower than 1 was marked ×. The result is shown in Table 9.

**[Table 9]**

| | Cont | T1 | T2 | T3 |
|---|---|---|---|---|
| Richness (thickness) | Δ | Δ | ○ | ○ |
| An astringent taste | × | ○ | × | × |
| Lack of snappiness | × | Δ | × | Δ |

It was shown from comparing T1, to which powder prepared from the extract of 1) was added, with T2 and T3, to which powder prepared from an activated-carbon-treated extract were added, that T2 and T3 add richness (thickness) without enhancing negative flavors, such as an astringent taste and the lack of snappiness, compared to T1. It was thus shown that extract components (powder) that had monomers selectively removed from them can enhance only the positive flavors, without enhancing the negative flavor properties, by being added before fermentation and having a reduced percentage of monomers in the product.

### INDUSTRIAL APPLICABILITY

The present invention can add richness and robustness to *happoshu*, which generally has lower richness and robustness than beer, beer-taste beverages categorized as liquors, and beverages that have low or no alcohol, without enhancing an astringent taste or the lack of snappiness. It can provide beverages with richness or robustness due to its abundant incorporation of proanthocyanidin dimers to proanthocyanidin tetramers.

## Claims

1. A proanthocyanidin-containing plant extract, wherein a weight percentage of proanthocyanidin monomers against a total content of proanthocyanidin is 12% or lower.

2. The plant extract according to Claim 1, wherein the weight percentage of proanthocyanidin monomers against a total content of proanthocyanidin is 10% or lower.

3. The plant extract according to Claim 1 or 2, wherein the weight percentage of proanthocyanidin dimers to proanthocyanidin tetramers against a total content of proanthocyanidin is 75% or higher.

4. The plant extract according to any one of Claims 1 to 3, wherein a plant is hop.

5. A beverage having a total proanthocyanidin content of 1 ppm or higher, wherein the weight percentage of proanthocyanidin monomers against a total content of proanthocyanidin is 26% or lower.

6. The beverage according to Claim 5, wherein the weight percentage of proanthocyanidin monomers against a total content of proanthocyanidin is 19% or lower.

7. The beverage according to Claim 6, wherein the weight percentage of proanthocyanidin monomers against a total content of proanthocyanidin is 15% or lower.

8. The beverage according to any one of Claims 5 to 7, wherein proanthocyanidin is derived from hop.

9. The beverage according to any one of Claims 5 to 8, wherein the beverage is a beer-taste beverage.

10. A taste agent that contains proanthocyanidin, wherein the weight percentage of proanthocyanidin monomers against a total content of proanthocyanidin is 12% or lower.

11. The taste agent according to Claim 10, wherein the weight percentage of proanthocyanidin monomers against a total content of proanthocyanidin is 10% or lower.

12. The taste agent according to Claim 10 or 11, wherein the weight percentage of proanthocyanidin dimers to proanthocyanidin tetramers against a total content of proanthocyanidin is 75% or higher.

13. The taste agent according to any one of Claims 10 to 12, wherein a plant is hop.

14. A method for producing a plant extract with a reduced amount of proanthocyanidin monomers, comprising the steps of:
(i) extracting polyphenol from a plant using an aqueous solvent;
(ii) performing an activated carbon treatment on an obtained extract.

15. The method according to Claim 14, wherein a plant is hop.
